# EUROPÄISCHE PATENTANMELDUNG

(11) **EP 3 680 511 A1**
(43) Veröffentlichungstag der Anmeldung: **15.07.2020**
(21) Anmeldenummer: 20150713.4
(22) Anmeldetag: 08.01.2020
(51) Int. Cl.: F16F 15/03, B63B 39/06, B63H 19/02, F03B 13/18, F03B 13/12, H02K 7/14, H02K 7/18, H02K 41/03

(54) **ENERGIERÜCKGEWINNUNGSSYSTEM**

(30) Priorität: 08.01.2019 DE 102019100326
(71) Anmelder: MML Solutions GmbH, 46487 Wesel (DE)
(72) Erfinder: MTAUWEG, Samer, 27568 Bremerhaven (DE)
(74) Vertreter: advotec.

(57) **Zusammenfassung**

Es wird ein Energierückgewinnungssystem vorgeschlagen, das eine elektrische Linearmaschine (2, 4) aufweist, welche derart ausgebildet ist, dass sie in einem Generatorbetrieb als Stoßdämpfer zur unmittelbaren Energierückgewinnung bei dynamischen Stößen und/oder bei hydrodynamischen Rückstellkräften und/oder bei nahezu statischen Verlagerungen oder in einem Motorbetrieb als Stellglied zwecks Einstellung gewünschter Dynamik verwendet werden kann.

## Beschreibung

Die Erfindung betrifft ein Energierückgewinnungssystem, ein Verfahren zum Betrieb eines Energierückgewinnungssystems sowie die Verwendung eines Energierückgewinnungssystems.

### Bekannter Stand der Technik

Aus der Praxis sind Stoßdämpfer für unterschiedlichste Einsatzzwecke bekannt. Grundsätzlich umfassen solche Stoßdämpfer ein Kraftspeicherelement, wie beispielsweise eine Feder, und einen hydraulischen Dämpfer oder einen Luftkammer-Dämpfer. Das Kraftspeicherelement und der Dämpfer können in einer parallelen Schaltung oder einer Reihenschaltung zur Dämpfung von Stößen zueinander angeordnet sein. Stoßdämpfer finden beispielsweise Einsatz in Fahrzeugfahrwerken oder Fahrradrahmen.

Stoßdämpfer können auch Teil eines Stabilisators sein. Ein Anwendungsbeispiel ist der Einsatz eines Schiffstabilisators zur Reduktion oder Verhinderung von Rollen des Schiffes bei Wind und/oder Seegang. Bei großen Schiffen werden die Stabilisatoren als profilierte Konstruktionen verwendet, wobei die Stoßdämpfer ein Verschwenken der Stabilisatoren dämpfen können.

Bekannt ist zudem ein rekuperationsfähiger PKW-Stoßdämpfer. Dieses System umfasst einen Dämpfer, ein Ventilsystem, ein Steuergerät, einen Elektromotor und eine elektrohydraulische Zahnradpumpe. Die Zahnradpumpe reguliert - angetrieben vom elektronisch gesteuerten Elektromotor - den Ölfluss im Dämpfer. Die Dämpferkennlinie passt sich dabei automatisch jeder Fahrsituation an; auch Nickbewegungen der Karosserie bei abrupten Bremsmanövern und Wankbewegungen bei schnellem Ausweichen lassen sich reduzieren. Sobald es die Fahrsituation zulässt, nutzt das Ventilsystem die Bewegung des Dämpferkolbens automatisch zur Rekuperation. Dann lenkt das System das Öl im Dämpfer so um, dass es den elektrischen Pumpenmotor antreibt. Dieser funktioniert dann wie ein Generator (Generatorbetrieb) - er wandelt die entstehende Bewegungsenergie in Strom um und speist diesen in das Bordnetz des Fahrzeugs ein.

Es ist zudem ein rekuperationsfähiger elektromechanischer Rotationsdämpfer bekannt. Die Rekuperationsleistung kann auf deutschen Straßen im Mittel etwa 100 bis 150 Wh betragen - von 3 Wh auf einer frisch asphaltierten Autobahn bis zu 613 Wh auf einer holprigen Nebenstraße. Entsprechend rückgespeist entspricht dies bei gebräuchlichem Fahrbetrieb einer Kohlenstoffdioxidemissionsreduktion von etwa zwei bis zu drei Gramm pro gefahrenem Kilometer.

Es sind zudem übliche elektrische Linearmaschinen oder Linearmotoren bekannt. Diese können eine flache Bauweise aufweisen, wobei sie dann einem Direktantrieb dienen. Deren Vorteil kann in deren kompakter Bauweise und hohe Kraftdichte gesehen werden. Ein Beispiel ist eine Werkzeugmaschine. Elektrische Linearmaschinen oder Linearmotoren können auch eine zylindrische Bauweise aufweisen, wobei der Aktuator oder Läufer beispielsweise aus Neodym-Magneten besteht, die in einem Edelstahlrohr untergebracht sind. Im Stator befinden sich dann die Motorwicklungen.

Linearmaschinen können jedoch auch als Lineargeneratoren ausgebildet sein, wobei der Einsatz von einem Lineargenerator in einer Freikolbenmaschine, bzw. an dem Schaft, auch als Freikolben-Lineargenerator bezeichnet, der Schaffung eines Antriebssystems im Bereich der Elektromobilität dienen kann.

Als nachteilig kann bei allen genannten Systemen die bislang noch unerwünscht hohe verlustbehaftete Energieumwandlung sowie der mitunter komplexe Systemaufbau angesehen werden.

Der Erfindung liegt daher die Aufgabe zugrunde, ein Energierückgewinnungssystem zu schaffen, welches die Probleme des Standes der Technik überwindet, insbesondere eine wirkungsvollere Energieumwandlung bei zugleich erheblicher Komplexitätsreduktion ermöglicht.

Diese Aufgabe ist durch das Energierückgewinnungssystem mit den Merkmalen des Anspruch 1, durch das Energierückgewinnungssystem gemäß Anspruch 12, durch das Verfahren nach Anspruch 13 und durch die Verwendung nach Anspruch 15 gelöst. Vorteilhafte Weiterbildungen der Erfindung sind in den Unteransprüchen angegeben.

In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

### Beschreibung der Erfindung

Erfindungsgemäß wird also ein Energierückgewinnungssystem vorgeschlagen, welches eine elektrische Linearmaschine umfasst. Diese ist derart ausgebildet, dass sie in einem Generatorbetrieb als Stoßdämpfer zur unmittelbaren Energierückgewinnung bei dynamischen Stößen und/oder bei hydrodynamischen Rückstellkräften und/oder bei nahezu statischen Verlagerungen oder in einem Motorbetrieb als Stellglied zwecks Einstellung gewünschter Dynamik verwendet werden kann.

Die Erfindung steigert die Energieausbeute bzw. verringert die verlustbehaftete Energieumwandlung und reduziert die Systemkomplexität dadurch, dass die translatorische Bewegungsenergie direkt bzw. unmittelbar an dem energieentstehenden Ort durch den Lineargenerator bzw. die Linearmaschine abgefangen und in elektrische Energie umgewandelt wird. Mittels der Erfindung kann daher auf das bisherige mehrfache Umwandeln von Bewegungsenergie in elektrische Energie verzichtet werden, was erhebliche Energieverluste reduziert. Verzichtet werden kann nämlich zukünftig auf ein erstes Umwandeln von entstehender translatorischer Bewegungsenergie eines Stoßdämpfers in rotatorische Bewegungsenergie und anschließend ein zweites Umwandeln der rotatorischen Bewegungsenergie mittels Getriebe und einer rotierenden elektrischen Maschine in elektrische Energie.

Bei der Erfindung kann die direkte und unmittelbare Energierückgewinnung und -umwandlung ohne zusätzlichen Umwandler für translatorische Bewegung in rotatorische Bewegung erfolgen.

Die Linearmaschine umfasst in bekannter Weise zumindest einen Stator und zumindest einen Läufer bzw. Aktor. Da die Linearmaschine als Stoßdämpfer dient und als solcher ausgebildet ist, dient sie dem Dämpfen von Stößen einer Masse. Da die Linearmaschine aber zudem eine elektrische Antriebsmaschine ist, wandelt sie die Bewegungsenergie der Stöße unmittelbar in elektrische Energie am energieentstehenden Ort um.

Die Erfindung umfasst eine elektrische Linearmaschine, welche in einem Generatorbetrieb als Stoßdämpfer zwecks Energierückgewinnung bei dynamischen Stößen z.B. bei den Fahrzeugfahrwerken verwendet werden kann. Eine weitere Anwendung bei hydrodynamischen Rückstellkräften ist denkbar, z.B. bei den Stabilisatoren, wie Schiffstabilisatoren, oder bei nahezu statischen Verlagerungen z.B. bei Kranhuben. Zudem lässt sich die erfindungsgemäße Liniermaschinen im Motorbetrieb als Stellglied zwecks Einstellung gewünschter Dynamik z.B. bei den Fahrwerken von Fahrzeugen einsetzen.

Gemäß einer Weiterbildung des erfindungsgemäßen Energierückgewinnungssystems umfasst dieses zumindest ein Kraftspeichermittel, welches vorzugsweise eine Federeinheit, weiter bevorzugt eine zylindrische Feder und/oder Tellerfeder ist. Derartige Kraftspeichermittel fungieren insbesondere als rückstellende Elemente, um ein System in einen Ausgangszustand zurückzustellen. Das Kraftspeichermittel kann auch mehrere Federeinheiten oder mehrere gleiche oder artfremde federn umfassen.

Weiterbildungsgemäß kann das erfindungsgemäße Energierückgewinnungssystem derart ausgebildet sein, dass die zylindrische Feder oder die zumindest eine Tellerfeder von einem Dornelement durchgriffen und von einer Hülse umgeben ist, wobei das Dornelement vorzugsweise als Dämpfungselement ausgebildet ist. Das Dornelement kann als zylindrisches Langelement weitgehend gleichen Durchmessers oder als konisches Langelement ausgebildet sein. Umfangsseitig des Dornelements ist die Feder anordenbar derart, dass das Dornelement als innere Führung dient und ein bezogen auf eine das Dornelement durchgreifende Längsachse geführt Stauchung und Streckung der jeweiligen Feder ermöglicht.

Es ist gemäß einer weiteren Ausgestaltung des erfindungsgemäßen Energierückgewinnungssystems denkbar, dass zumindest ein Dämpfungselement, vorzugsweise gewählt aus der Gruppe umfassend: Gummi, Elastomere, Luftkammer und/oder hydraulische Dämpfungselemente vorgesehen ist. Dieses Dämpfungselement kann das im vorhergehenden Absatz genannte Dämpfungselement oder aber auch ein zusätzliches Dämpfungselement sein. Ein derartiges Dämpfungselement fungiert insbesondere als schwingungsdämpfendes Element, welches die Linearmaschine vor beschädigenden Schwingungen schütz. Diese weisen Notlaufeigenschaften auf und übernehmen zudem die Aufgabe der Dämpfung beim Ausfall von elektromechanischen Dämpfern oder der linearen elektrischen Maschine.

Denkbar ist gemäß einer weiteren Ausgestaltung des erfindungsgemäßen Energierückgewinnungssystems, dass eine Reihen- oder Parallelschaltung des zumindest einen Kraftspeichermittels und/oder des zumindest einen Dämpfungselements vorgesehen ist. Dadurch kann eine Federfunktion in das Dämpfungselement integriert werden.

Eine weitere denkbare Ausgestaltung des erfindungsgemäßen Energierückgewinnungssystems kann zumindest einen Energiespeicher vorsehen, vorzugsweise ausgebildet zur Speicherung von von dem Energierückgewinnungssystem rückgewonnener Energie, vorzugsweise elektrischer Energie, und bedarfsweisen Abgabe dieser Energie.

Weiterbildungsgemäß kann das erfindungsgemäße Energierückgewinnungssystem derart ausgestaltet sein, dass es einen Stator und einen permanentmagnetentragenden und bezüglich des Stators verschiebbaren Aktor umfasst, wobei der Aktor als innerer Aktor oder äußerer Aktor ausgeführt sein kann. Somit ist der Aktor als innerer Aktor zumindest abschnittsweise von dem Stator umgeben und innerhalb dessen verschiebbar. Der Aktor kann jedoch auch als äußerer Aktor hülsenartig den Stator zumindest abschnittsweise umgreifen.

Weiterbildungsgemäß kann das erfindungsgemäße Energierückgewinnungssystem zwei oder mehr elektrische Linearmaschinen umfassen, welche in Parallel- und/oder Reihenschaltung angeordnet sein können.

Gemäß einer weiteren Ausführungsform kann das erfindungsgemäße Energierückgewinnungssystem eine Rahmenvorrichtung mit zumindest zwei Schenkeln umfassen. Die Schenkel können sich gegenüberliegen und über ein Mittelelement verbunden sein. Dadurch ist ein Rahmen ausgebildet, welcher die Verstellung eines zwischen den Schenkeln angeordneten Elements in beide Schenkelrichtungen und somit eine Umwandlung der Bewegungsenergie des verstellten Elements aus beiden Schenkelrichtungen ermöglicht.

Es ist gemäß einer Weiterbildung des erfindungsgemäßen Energierückgewinnungssystems eine schwenkbare und profilierte Konstruktion denkbar, welche zumindest teilweise innerhalb der Rahmenvorrichtung angeordnet ist. Die profilierte Konstruktion kann beispielsweise mittig zwischen den Schenkeln angeordnet sein. Dadurch kann die Rahmenvorrichtung sowohl einen mechanischen Schutz bieten, wie auch als Ankerpunkt für zumindest eine Linearmaschine.

Weiterbildungsgemäß kann das erfindungsgemäße Energierückgewinnungssystem zwei Energierückgewinnungssysteme umfassen, wobei jeweils eines zu jeder Seite der profilierten Konstruktion angeordnet ist und sich einends an der profilierten Konstruktion und anderenends an der Rahmenvorrichtung abstützt. Dadurch ist ein konstruktiv einfaches System realisierbar, welches die Bewegungen eines Elements, wie einer profilierten Konstruktion in mehrere Richtungen in elektrische Energie umwandeln kann.

Es ist alternativ zu den übrigen beschriebenen Ausführungen oder zusätzlich dazu ein Energierückgewinnungssystem denkbar, welches sich auszeichnet durch eine Rahmenvorrichtung mit zumindest einem Schenkel, eine schwenkbare und profilierte Konstruktion, welche zumindest teilweise innerhalb der Rahmenvorrichtung angeordnet ist sowie zumindest ein Hydraulikzylinder, der sich einends an der profilierten Konstruktion und anderenends an der Rahmenvorrichtung abstützt. Dadurch kann das bereits bezüglich des Linearmotors beschriebene erfindungsgemäße Prinzip auch unter Einsatz zumindest eines Hydraulikzylinders verwendet werden. Das durch die Bewegung des Hydraulikzylinders bewegte Fluid kann via eines Ventils über einen Fluidpfad an eine Turbine und/oder einen Regler geleitet werden, welcher wiederum auch mit der Turbine verbunden sein kann. An die Turbine ist ein Generator anbindbar, der einen Energiespeicher und/oder einen Verbraucher mit elektrischer Energie speisen kann. Es sind auch zwei Schenkel denkbar, welche sich gegenüber liegen können und/oder zwei Hydraulikzylinder denkbar, wobei dann jeweils einer zu jeder Seite der profilierten Konstruktion angeordnet ist und sich anderenends an der Rahmenvorrichtung abstützt. Denkbar ist zudem die Verwendung eines Hydraulikzylinder umfassenden Energierückgewinnungssystems in einem Generatorbetrieb als Stoßdämpfer zwecks Energierückgewinnung bei hydrodynamischen Rückstellkräften. Dabei kann ein solches Energierückgewinnungssystems Teil eines Schiffstabilisators sein. Es ist auch ein Schiffstabilisator mit zumindest einem solchen Energierückgewinnungssystem denkbar.
Die eingangs genannten Vorteile ergeben sich in analoger Weise auch bezüglich dieses Energierückgewinnungssystems, weshalb darauf verwiesen wird. Auch die oben genannten Ausgestaltungen sollen, sofern nicht technisch widersprechend, als in Kombination mit diesem Energierückgewinnungssystem offenbart und beanspruchbar gelten, um Wiederholungen zu vermeiden.

Erfindungsgemäß wird zudem ein Verfahren zum Betrieb eines Energierückgewinnungssystems nach zumindest einem der vorangehenden Absätze vorgeschlagen, umfassende zumindest die folgenden Schritte:
a. Anordnung der elektrischen Linearmaschine direkt bzw. unmittelbar an dem energieentstehenden Ort,
b. unmittelbare Energierückgewinnung mittels Umwandlung von Bewegungsenergie in elektrische Energie, wobei das Energierückgewinnungssystem:
c. in einem Generatorbetrieb als Stoßdämpfer zwecks Energierückgewinnung bei dynamischen Stößen dient, und/oder
d. in einem Generatorbetrieb als Stoßdämpfer zwecks Energierückgewinnung bei hydrodynamischen Rückstellkräften dient, und/oder
e. in einem Generatorbetrieb als Stoßdämpfer zwecks Energierückgewinnung bei nahezu statischen Verlagerungen dient, und/oder
f. in einem Motorbetrieb als Stellglied zwecks Einstellung gewünschter Dynamik dient.

Die eingangs genannten Vorteile des Energierückgewinnungssystems ergeben sich in analoger Weise auch bezüglich des Verfahrens, weshalb darauf verwiesen wird.

Erfindungsgemäß wird zudem eine Verwendung eines Energierückgewinnungssystems nach zumindest einem der vorangehenden Ansprüche als Stoßdämpfer zur Umwandlung von Bewegungsenergie in elektrische Energie direkt bzw. unmittelbar an dem energieentstehenden Ort vorgeschlagen. Die eingangs genannten Vorteile des Energierückgewinnungssystems ergeben sich in analoger Weise auch bezüglich der Verwendung, weshalb darauf verwiesen wird.

Gemäß einer weiteren Ausgestaltung der erfindungsgemäßen Verwendung kann diese bei einem Fahrrad, einem Roller, einem Tretroller, einem Einpersonen-Transportmittel, einem LKW, einem PKW oder einem Schiff stattfinden. Ein Einpersonen-Transportmittel kann beispielsweise ein "Segway i2 SE" oder "Segway Ninebot" sein.

Weitere Vorteile, Merkmale und Einzelheiten der Erfindung ergeben sich aus der nachfolgenden Beschreibung eines bevorzugten Ausführungsbeispiels sowie anhand der Zeichnung. Es zeigt:
- Fig. 1: eine Funktionsskizze eines erfindungsgemäßen Energierückgewinnungssystems;
- Fig. 2: zwei Linearmaschinen nach Ausführungsformen der Erfindung;
- Fig. 3: eine Ausführungsvariante eines erfindungsgemäßen Energierückgewinnungssystems;
- Fig. 4: ein Kraftspeichermittel gemäß einer ersten Ausführungsform;
- Fig. 5: ein Kraftspeichermittel gemäß einer weiteren Ausführungsform;
- Fig. 6a: zwei Verschaltungsvarianten des erfindungsgemäßen Energierückgewinnungssystems;
- Fig. 6b: diverse Einsatzgebiete des erfindungsgemäßen Energierückgewinnungssystems;
- Fig. 7a: eine weitere Ausführungsvariante eines erfindungsgemäßen Energierückgewinnungssystems;
- Fig. 7b: einen Einsatzzweck des Energierückgewinnungssystems nach Fig. 7a;
- Fig. 7c: einen Schnitt entlang der Linie VIIc-VIIc in Fig. 7b;
- Fig. 8a: eine weitere Ausführungsvariante eines erfindungsgemäßen Energierückgewinnungssystems;
- Fig. 8b: einen Einsatzzweck des Energierückgewinnungssystems nach Fig. 8a;
- Fig. 8c: einen Schnitt entlang der Linie VIIIc-VIIIc in Fig. 8b; und
- Fig. 8d: eine Funktionsskizze des Energierückgewinnungssystems nach Fig. 8a.

In den Figuren sind gleiche oder einander entsprechende Elemente jeweils mit den gleichen Bezugszeichen bezeichnet und werden daher, sofern nicht zweckmäßig, nicht erneut beschrieben.

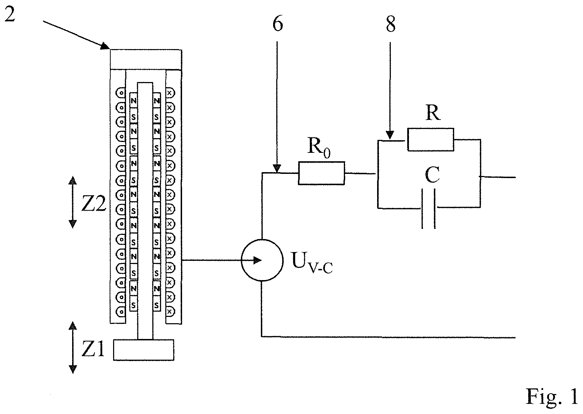

Figur 1 zeigt eine Funktionsskizze eines erfindungsgemäßen Energierückgewinnungssystems, bei welchem ein Lineargenerator bzw. eine Linearmaschine zur Energiegewinnung bei translatorischen Pendelbewegung oder bei lokalen translatorischen Schwingungen Einsatz findet, wo diese Schwingungen auch gedämpft werden sollen.

Die zumindest eine Linearmaschine kann flach bauend sein und/oder eine zylindrische und/oder eine mehrflächige Bauform aufweisen. Ein Anwendungsbeispiel zur Batterieaufladung durch Energierückgewinnung im Bereich der Elektromobilität ist insbesondere in Fig. 1 gezeigt.

Das Energierückgewinnungssystem umfasst eine elektrische Linearmaschine 2, die eine Bewegung unmittelbar am Ort der Energieentstehung in elektrische Energie umwandelt und diese einem Schaltkreis 6 zuführt, in welchen auch ein Energiespeicher 8 schaltbar ist. Der Energiespeicher 8 ist ausgebildet zur Speicherung von von dem Energierückgewinnungssystem rückgewonnener Energie, vorzugsweise elektrischer Energie, und bedarfsweisen Abgabe dieser Energie. Somit kann die Bewegungsenergie bereits am bewegungsenergieentstehenden Ort in elektrische Energie umgewandelt werden.

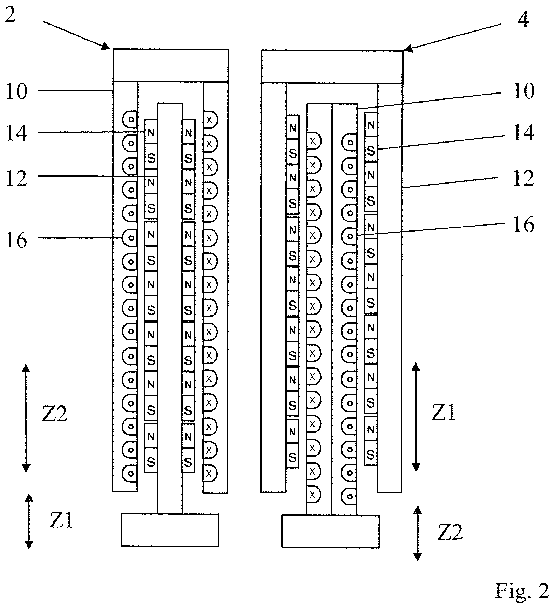

Figur 2 verdeutlicht zwei Linearmaschinen 2 und 4 nach der Erfindung. Beide Linearmaschinen 2 und 4 umfassen einen Stator 10 und einen Permanentmagneten 14 tragenden und bezüglich des Stators 10 entlang einer Längsachse verschiebbaren Aktor 12. Bei der in der Bildebene linken Linearmaschine 2 ist der Aktor 12 als innerer Aktor ausgeführt, welcher innerhalb des zumindest relativ ortsfesten Stators 10 entlang seiner Längsachse translatorisch in Z1-Richtung verschiebbar ist. Es ist jedoch auch denkbar, dass alternativ oder zusätzlich der Stator 10 in Z2-Richtung verschiebbar angeordnet ist. Bei der in der Bildebene rechten Linearmaschine 4 ist der Aktor 12 als äußerer Aktor ausgeführt, der den Stator 10 umgreift. Der Stator 10 umfasst jeweils eine Wicklung 16, die entsprechend der Bauform der Linearmaschine 2, 4 den Aktor 12 entweder umgibt oder innerhalb dessen angeordnet ist.

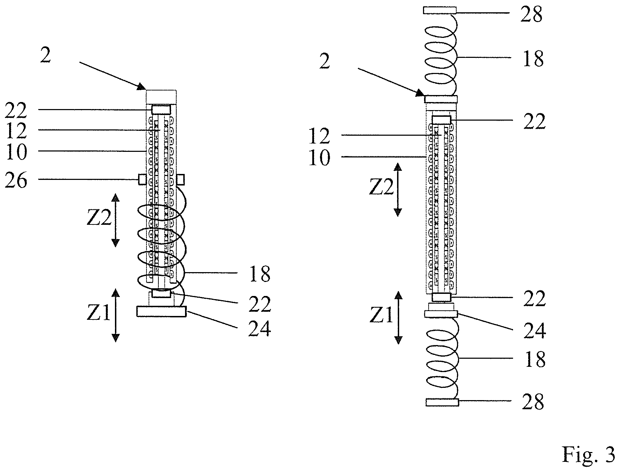

In Figur 3 sind zwei elektrische Linearmaschinen 2 gezeigt, welche in Parallelschaltung oder Reihenschaltung angeordnet sind, hier lediglich an einem Lineargenerator 2 gezeigt, jedoch darauf nicht beschränkt. Das Energierückgewinnungssystem kann als Kombination eines Lineargenerators 2 mit zumindest einer zylindrischen Schraubenfeder 18 und optionalen Dämpfungselementen 22 ausgeführt sein. Ein Dämpfungselement 22 ist zumindest relativ ortsfest innerhalb des Stators 10 angeordnet am Ende der Bewegungsbahn des Aktors 12, um dessen Bewegungsbahn zu begrenzen. Ein weiteres Dämpfungselement 22 ist ortsverstellbar mit dem Aktor 12 derart an einem gleichsam verstellbaren Basiselement 24 angeordnet, dass es am Ende der Bewegungsbahn des Aktors 12 an den Stator 10 anschlägt, um die Bewegungsbahn zu begrenzen. Der Aktor 12 ist mit dem sich bewegenden System verbunden.

Die Parallelschaltung der in der Bildebene linken Linearmaschine 2 ergibt sich durch die parallele Anordnung von einer Schraubenfeder 18 und Dämpfungselementen 22 zueinander. Die Schraubenfeder 18 stützt sich einends an dem Basiselement 24 und anderenends an einem Flansch 26 des Stators 10 ab. Das Energierückgewinnungssystem kann jedoch auch als Kombination eines Lineargenerators 2 mit zumindest zwei zylindrischen Schraubenfedern 18 und optionalen Dämpfungselementen 22 ausgeführt sein.

Die Reihenschaltung der in der Bildebene rechten Linearmaschine 2 ergibt sich durch die Reihenanordnung von zwei Schraubenfedern 18 und Dämpfungselementen 22 zueinander. Die Schraubenfedern 18 stützen sich jeweils einends an einem zumindest relativ ortsfesten Basiselement 28 ab. Eine der Schraubenfedern 18 stützt sich anderenends an dem Stator 10 und die andere der Schraubenfedern 18 stützt sich anderenends an dem Aktor 12 ab.

Die optionalen Dämpfungselemente 22 können Zwecks von Notlaufeigenschaften bei Funktionsstörung der Linearmaschine Dämpfungsaufgaben übernehmen.

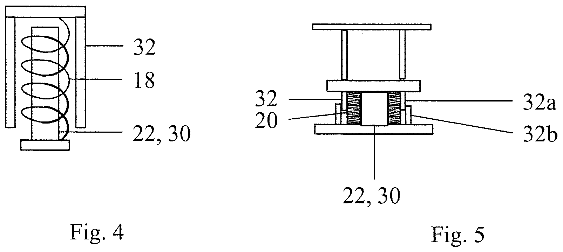

Figur 4 zeigt eine zylindrische Schraubenfeder 18, die von einem Dornelement 30 durchgriffen und von einer Hülse 32 umgeben ist, wobei das Dornelement 30 als Dämpfungselement 22 ausgebildet ist. Ein vergleichbarer Aufbau ist in Figur 5 gezeigt, welcher ein Tellerfederpaket aus Tellerfedern 20 zeigt. Eine Tellerfeder 20 umfasst eine Federscheibe in bekannter Weise, wobei das Tellerfederpaket ebenso von einem Dornelement 30 durchgriffen ist, welches gleichsam als Dämpfungselement 22 ausgebildet ist. Eine Hülse 32 mit zylindrischem Oberteil 32a und zylindrischem Unterteil 32b umgibt das Tellerfederpaket. Mittels dieser Ausführungen kann man eine Federungsaufgabe in die Dämpfungselemente integrieren, um Bauraum zu sparen.

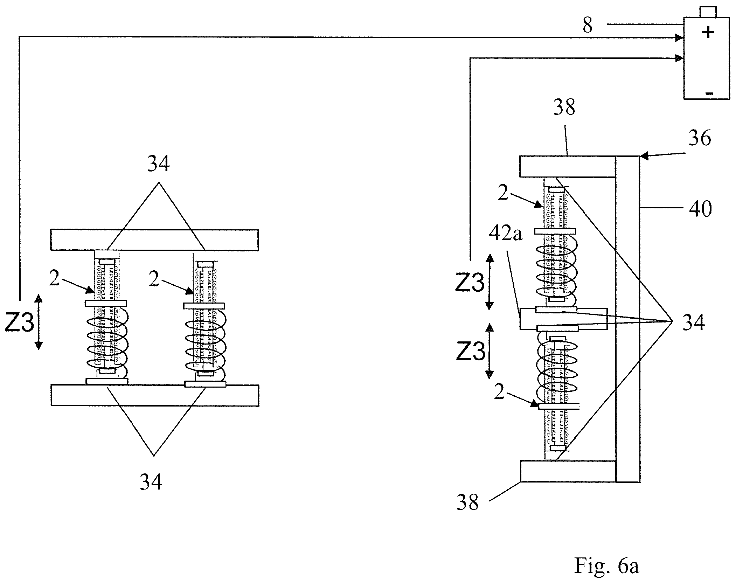

Figur 6a zeigt in der linken Bildseite zwei elektrische Linearmaschinen 2, welche sich jeweils zwischen zwei Anordnungsstellen 34 erstrecken und parallel geschaltet sind. Die beiden Anordnungsstellen 34 je Linearmaschine 2 sind relativ zueinander beweglich an einem Element oder einer Elementanordnung Ausgebildet, welche zueinander entlang einer Z3-Richtung beweglich sind. In der rechten Bildseite sind zwei elektrische Linearmaschinen 2 gezeigt, welche sich jeweils zwischen zwei Anordnungsstellen 34 erstrecken und in Reihe geschaltet sind. Die Reihenschaltung ist beispielhaft an einer Rahmenvorrichtung 36 mit zumindest zwei Schenkeln 38 gezeigt. Die Schenkel 38 liegen sich gegenüber und sind mittels eines Mittelelements 40 miteinander verbunden. Jeder der Schenkel trägt eine der Anordnungsstellen 34. Zwischen den Schenkeln 38 ist eine verstellbare Konstruktion 42a angeordnet, welche sich entlang der Längsachsen der Linearmaschinen 2 verstellen lässt. Die Konstruktion 42a kann mit der Rahmenvorrichtung 36 direkt verbunden sein oder aber auch lediglich indirekt vermittels der zumindest einen Linearmaschine 2. Bei der gezeigten Anordnung und Verstellung der Konstruktion 42a wird eine der beiden Linearmaschinen 2 gestreckt während die andere gestaucht wird. Bei Verstellung der Konstruktion 42a in die andere Richtung erfolgt eine dazu umgekehrte Belastung der Linearmaschinen 2.

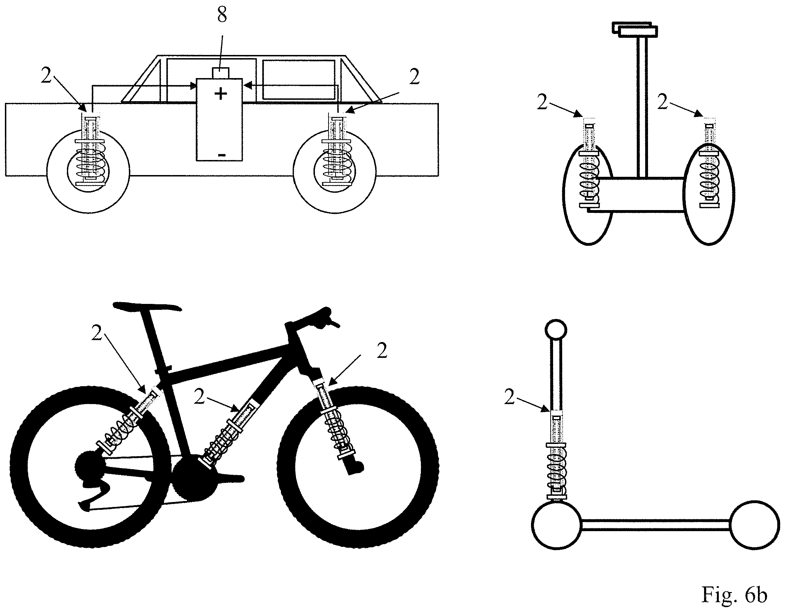

In Figur 6b sind beispielhaft diverse Einsatzgebiete und Verwendungen des erfindungsgemäßen Energierückgewinnungssystems gezeigt. Das System kann im Bereich von Radaufhängungen eines PKW angeordnet werden oder aber auch in einer Federgabel, einer Sattelstrebe, einem Sattelrohr und/oder einem Unterrohr eines Fahrrads. Denkbar ist auch der Einsatz im Bereich von Radaufhängungen eines Einpersonen-Transportmittels, wie bei dem gezeigten "Segway Ninebot" oder dem gezeigten Tretroller.

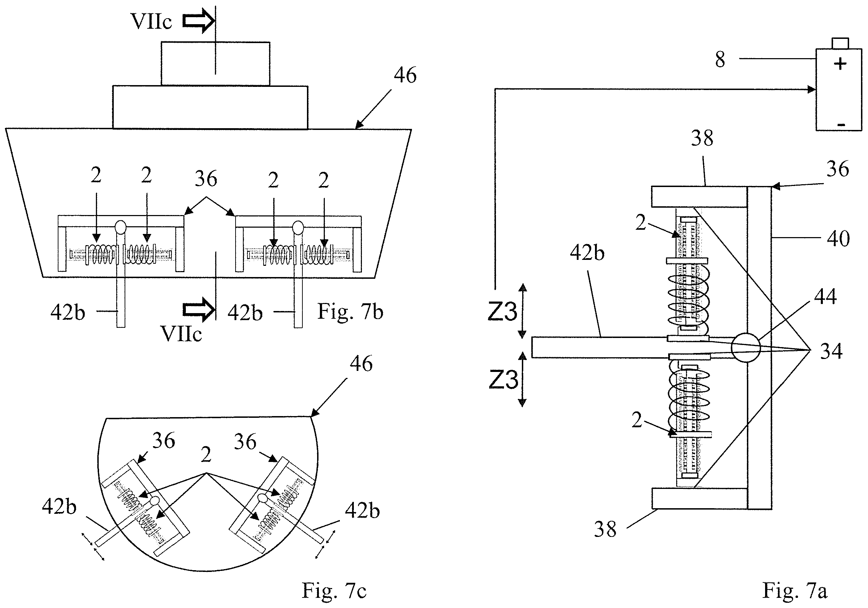

Die Figuren 7a bis 7c verdeutlichen eine vorzugsweise maritime Verwendung des Energierückgewinnungssystems zur unmittelbaren Energierückgewinnung bei hydrodynamischen Rückstellkräften. Das Energierückgewinnungssystem kann Teil eines Schiffstabilisators sein. Es umfasst die bereits beschriebene Rahmenvorrichtung 36 mit zwei Linearmaschinen 2 in Reihenschaltung. An dem Mittelelement 40 ist nun über ein Gelenk 44, vorzugsweise ein Scharniergelenk, eine schwenkbare und profilierte Konstruktion 42b angeordnet, welche zumindest teilweise innerhalb der Rahmenvorrichtung 36 angeordnet ist. Die profilierte Konstruktion 42b umfasst für jedes der Linearmaschinen 2 eine Anordnungsstelle 34. Die profilierte Konstruktion 42b, welche eine Flosse eines Stabilisators eines Schiffes 46 sein kann, wird von der Wasserströmung um des Gelenk 44 bewegt, wodurch auch die Linearmaschinen 2 in beschriebener Weise bewegt werden und elektrischen Strom vor Ort generieren. Jede der Anordnungsstellen 34 kann eine rotatorische Lagerung für die jeweilige Linearmaschine 2 aufweisen. Das erfindungsgemäße System kann an einem oder mehreren Stabilisatoren je Schiffseite (Backbord/Steuerbord) verwendet werden.

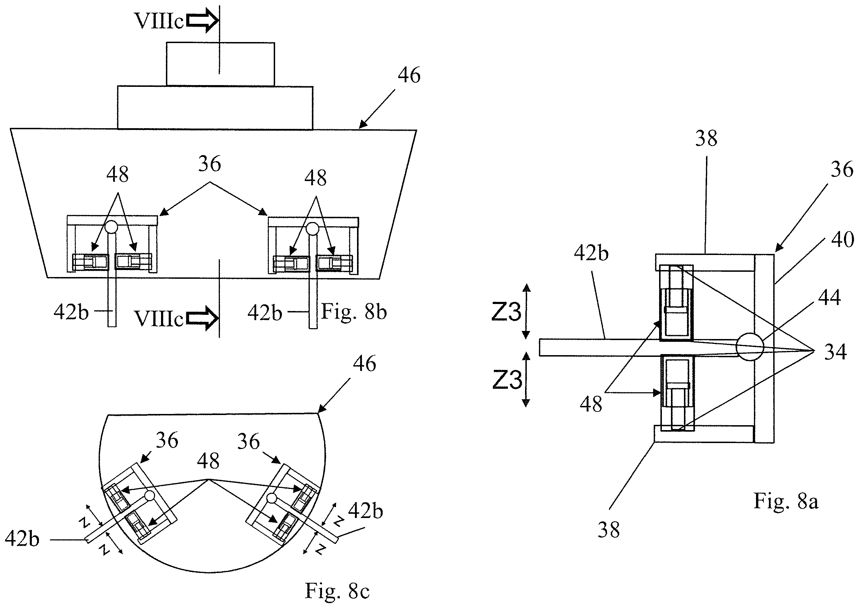

Die Figuren 8a bis 8d verdeutlichen eine maritime Verwendung des erfindungsgemäßen Energierückgewinnungssystems zur unmittelbaren Energierückgewinnung bei hydrodynamischen Rückstellkräften unter Nutzung von Hydraulikzylindern. Um Wiederholungen zu vermeiden sollen im Folgenden lediglich die Unterschiede zu den bisher beschriebenen Ausgestaltungen des Energierückgewinnungssystems und insbesondere bezüglich des Energierückgewinnungssystems gemäß der Figuren 7a bis 7c beschrieben werden.

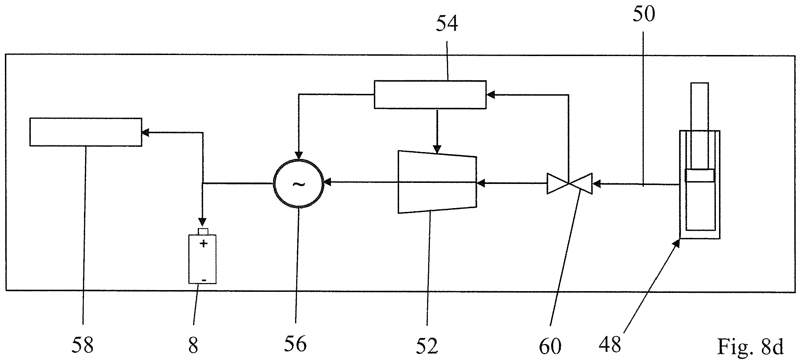

Anstelle von Linearmotoren 2, 4 sind nunmehr Hydraulikzylinder 48 angeordnet. Diese stützen sich jeweils, wie Figur 8a zeigt, einends an dem Schenkel 38 und anderenends an der Konstruktion 42b ab. Wie aus Fig. 8d ersichtlich, kann durch die Bewegung der Konstruktion 42b und dadurch der Hydraulikzylinder 34 das bewegte Fluid bzw. die Hydraulikflüssigkeit über einen Fluidpfad 50 und ein verstellbares Ventil 60 an eine Turbine 52 und/oder einen Regler 54 geleitet werden. Der Regler 54 ist ebenfalls mit der Turbine 52 sowie einem Generator 56 verbunden. An die Turbine 52 ist der Generator 56 in bekannter Weise angebunden, der den Energiespeicher 8 und/oder einen Verbraucher 58 mit elektrischer Energie speist.

Der Regler 54 regelt einen Hydraulikflüssigkeitsaustausch zwischen mehreren Hydraulikzylindern 48 und/oder zur Turbine 52. Mittels Regler 54 sind zudem beispielswiese Schaufeln der Turbine 52 verstellbar, um deren Leistung zu beeinflussen. Der Regler kann zudem auf den Generator 56 einwirken, um für eine einheitliche Ausgangsspannung oder Frequenz zu sorgen.

Die Richtungen Z1, Z2 und Z3 können parallel zueinander verlaufen.

### Bezugszeichenliste

- 2: Linearmaschine
- 4: Linearmaschine
- 6: Schaltkreis
- 8: Energiespeicher
- 10: Stator
- 12: Aktor
- 14: Permanentmagnet
- 16: Wicklung
- 18: Schraubenfeder
- 20: Tellerfeder
- 22: Dämpfungselement
- 24: Basiselement
- 26: Flansch
- 28: Basiselement
- 30: Dornelement
- 32: Hülse
- 32a: Oberteil
- 32b: Unterteil
- 34: Anordnungsstelle
- 36: Rahmenvorrichtung
- 38: Schenkel
- 40: Mittelelement
- 42a: Konstruktion
- 42b: Konstruktion
- 44: Gelenk
- 46: Schiff
- 48: Hydraulikzylinder
- 50: Fluidpfad
- 52: Turbine
- 54: Regler
- 56: Generator
- 58: Verbraucher
- 60: Ventil

## Patentansprüche

1. Energierückgewinnungssystem, **gekennzeichnet durch**
eine elektrische Linearmaschine (2, 4), welche derart ausgebildet ist, dass sie in einem Generatorbetrieb als Stoßdämpfer zur unmittelbaren Energierückgewinnung bei dynamischen Stößen und/oder bei hydrodynamischen Rückstellkräften und/oder bei nahezu statischen Verlagerungen oder in einem Motorbetrieb als Stellglied zwecks Einstellung gewünschter Dynamik verwendet werden kann.

2. Energierückgewinnungssystem nach Anspruch 1, **gekennzeichnet durch** zumindest ein Kraftspeichermittel, vorzugsweise eine Federeinheit, weiter bevorzugt eine zylindrische Feder (18) und/oder Tellerfeder (20).

3. Energierückgewinnungssystem nach Anspruch 2, **dadurch gekennzeichnet, dass** die zylindrische Feder (18) oder die zumindest eine Tellerfeder (20) von einem Dornelement (30) durchgriffen und von einer Hülse (32) umgeben ist, wobei das Dornelement (30) vorzugsweise als Dämpfungselement (22) ausgebildet ist.

4. Energierückgewinnungssystem nach einem der vorangehenden Ansprüche, **gekennzeichnet durch** zumindest ein Dämpfungselement (22), vorzugsweise gewählt aus der Gruppe umfassend: Gummi, Elastomere, Luftkammer und/oder hydraulische Dämpfungselemente.

5. Energierückgewinnungssystem nach zumindest einem der Ansprüche 2 oder 3, **gekennzeichnet durch** eine Reihen- oder Parallelschaltung des zumindest einen Kraftspeichermittels und/oder des zumindest einen Dämpfungselements (22).

6. Energierückgewinnungssystem nach einem der vorangehenden Ansprüche, **gekennzeichnet durch** zumindest einen Energiespeicher (8), vorzugsweise ausgebildet zur Speicherung von von dem Energierückgewinnungssystem rückgewonnener Energie, vorzugsweise elektrischer Energie, und bedarfsweisen Abgabe dieser Energie.

7. Energierückgewinnungssystem nach einem der vorangehenden Ansprüche, **dadurch gekennzeichnet, dass** es einen Stator (10) und einen permanentmagnetentragenden und bezüglich des Stators (10) verschiebbaren Aktor (12) umfasst, wobei der Aktor (12) als innerer Aktor oder äußerer Aktor ausgeführt ist.

8. Energierückgewinnungssystem nach einem der vorangehenden Ansprüche, **gekennzeichnet durch** zwei oder mehr elektrische Linearmaschinen (2, 4), welche in Parallel- und/oder Reihenschaltung angeordnet sind.

9. Energierückgewinnungssystem nach einem der vorangehenden Ansprüche, **gekennzeichnet durch** eine Rahmenvorrichtung (36) mit zumindest zwei Schenkeln (38).

10. Energierückgewinnungssystem nach Anspruch 9, **gekennzeichnet durch** eine schwenkbare und profilierte Konstruktion (42a, 42b), welche zumindest teilweise innerhalb der Rahmenvorrichtung angeordnet ist.

11. Energierückgewinnungssystem nach Anspruch 10, **gekennzeichnet durch** zwei Energierückgewinnungssysteme oder zwei Linearantriebe (2, 4) eines Energierückgewinnungssystems, wobei jeweils eines zu jeder Seite der profilierten Konstruktion (42a, 42b) angeordnet ist und sich einends an der profilierten Konstruktion (42a, 42b) und anderenends an der Rahmenvorrichtung (36) abstützt.

12. Energierückgewinnungssystem, **gekennzeichnet durch** eine Rahmenvorrichtung (36) mit zumindest einem Schenkel (38), eine schwenkbare und profilierte Konstruktion (42a, 42b), welche zumindest teilweise innerhalb der Rahmenvorrichtung (36) angeordnet ist sowie zumindest ein Hydraulikzylinder (48), der sich einends an der profilierten Konstruktion (42a, 42b) und anderenends an der Rahmenvorrichtung (36) abstützt.

13. Verfahren zum Betrieb eines Energierückgewinnungssystems nach einem der vorangehenden Ansprüche, umfassende zumindest die folgenden Schritte:
a. Anordnung der elektrischen Linearmaschine direkt bzw. unmittelbar an dem energieentstehenden Ort,
b. unmittelbare Energierückgewinnung mittels Umwandlung von Bewegungsenergie in elektrische Energie, wobei das Energierückgewinnungssystem:
c. in einem Generatorbetrieb als Stoßdämpfer zwecks Energierückgewinnung bei dynamischen Stößen dient, und/oder
d. in einem Generatorbetrieb als Stoßdämpfer zwecks Energierückgewinnung bei hydrodynamischen Rückstellkräften dient, und/oder
e. in einem Generatorbetrieb als Stoßdämpfer zwecks Energierückgewinnung bei nahezu statischen Verlagerungen dient, und/oder
f. in einem Motorbetrieb als Stellglied zwecks Einstellung gewünschter Dynamik dient.

14. Verwendung eines Energierückgewinnungssystems nach einem der vorangehenden Ansprüche als Stoßdämpfer zur Umwandlung von Bewegungsenergie in elektrische Energie direkt bzw. unmittelbar an dem energieentstehenden Ort.

15. Verwendung eines Energierückgewinnungssystems nach Anspruch 14 bei einem Fahrrad, einem Roller, einem Tretroller, einem Einpersonen-Transportmittel, einem LKW, einem PKW oder einem Schiff (46).
